# EUROPÄISCHE PATENTANMELDUNG

(11) **EP 3 712 093 A1**
(43) Veröffentlichungstag der Anmeldung: **23.09.2020**
(21) Anmeldenummer: 19164101.8
(22) Anmeldetag: 20.03.2019
(51) Int. Cl.: B65G 47/53, B65G 47/64, B65G 65/02, B65G 67/08, B65G 67/24

(54) **AUTOMATISCHE BE- UND ENTLADUNG VON TRANSPORTWAGEN**

(71) Anmelder: Siemens Aktiengesellschaft, 80333 München (DE)
(72) Erfinder: FRITZSCHE, Roland, 90475 Nürnberg (DE)
(74) Vertreter: Maier, Daniel Oliver

(57) **Zusammenfassung**

Logistiksystem (1) zum Beladen und/oder Entladen eines Transportwagens (2) für Stückgüter (3), umfassend den Transportwagen (2) und ein stationäres Förderstreckensystem (4), das eine Zuführförderstrecke (41) und/oder eine Abförderstrecke (42) umfasst;
wobei der Transportwagen (2) zusätzlich ein Transportwagenförderstreckensystem (20) mit mindestens einer Transportwagenförderstrecke (21, 22, 23) umfasst, die so ausgestaltet und auf dem Transportwagen (2) angeordnet ist, dass sie zur Aufnahme von Stückgütern (3) an einen Ausgang (51) der Zuführförderstrecke (41) und/oder zur Abgabe von Stückgütern (3) an einen Eingang (52) der Abförderstrecke (42) angrenzend positionierbar ist;
wobei die Zuführförderstrecke (41) ausgestaltet ist, Stückgüter (3) auf die mindestens eine Transportwagenförderstrecke (21, 22, 23) zu fördern und/oder die Abförderstrecke (42) ausgestaltet ist, Stückgüter (3) von der mindestens einen Transportwagenförderstrecke (21, 22, 23) zu übernehmen; und die mindestens eine Transportwagenförderstrecke (21, 22, 23) ausgestaltet ist, die von der Zuführförderstrecke (41) geförderten Stückgüter vom Ausgang (51) der Zuführförderstrecke aufzunehmen und/oder Stückgüter (3) auf die Abförderstrecke (42) zu fördern; und
wobei die Transportwagenförderstrecke (21, 22, 23) ausgestaltet ist, Stückgüter auf der mindestens einen Transportwagenförderstrecke (21, 22, 23) als Bulkstrom zu fördern.

## Beschreibung

Die Erfindung bezieht sich auf das technische Gebiet der automatisierten Be- und Entladung von Transportwagen, beispielsweise von Anhängern, bemannten Fahrzeugen oder unbemannten Fahrzeugen (Automated Guided Vehicles/ AGVs) mit Stückgütern, wie beispielsweise Gepäckstücken.

Gepäckstücke haben sehr unterschiedliche Formen, Materialien und Verteilungen ihres Inhalts. Die Massenschwerpunkte von Gepäckstücken stimmen daher oft nicht mit ihren Volumenschwerpunkten überein.

In Flughäfen ist es wünschenswert, Gepäckstücke mit verschiedensten Formen, Materialien und Gewichten sicher, schnell, automatisiert und in grosser Zahl für flughafeninterne Transporte auf Transportwagen zu beladen und/oder von den Transportwagen zu entladen.

Bisher werden Gepäckstücke meist einzeln und manuell für flughafeninterne Transporte geladen. Beispielsweise werden Unit Load Devices (ULD) oder Dollies dabei mit oder ohne Be- oder Entladehilfen manuell mit Gepäckstucken be- oder entladen.

Zum Teil kommt auch Robotertechnik zum Einsatz.

Alternativ bietet die Firma BBHS eine Technologie an, die auf Basis vereinzelter Gepäckstücke und Schwerkraft auf eine automatische Be- und Entladung auf Gurt- oder Rollenfördertechnik aufbaut, und die in https://www.youtube.com/watch?v=kCXNAp7Nlko gezeigt wird.

Wagen zum Befördern von Stückgütern sind zudem in EP2057063B1, WO2016/107844 (A1), WO2016/107845(A1), WO2016/177886 (A1) offenbart.

Der Erfindung liegt die Aufgabe zugrunde, Stückgüter schnell, automatisiert und in grosser Zahl für beispielsweise flughafeninterne Transporte auf Transportwagen zu beladen und/oder von den Transportwagen zu entladen.

Diese Aufgabe wird durch die in den unabhängigen Ansprüchen beschriebenen Konzepte gelöst.

Gemäss einem Aspekt der Erfindung wird ein Verfahren zum Beladen eines Transportwagens für Stückgüter vorgestellt. Dabei wird der Transportwagen und eine von dem Transportwagen umfasste Transportwagenförderstrecke angrenzend an einen Ausgang einer von dem Transportwagen nicht umfassten Zuführförderstrecke positioniert. Stückgüter werden dann auf der Zuführförderstrecke zu der Transportwagenförderstrecke gefördert. Die auf der Zuführförderstrecke zu dem Transportwagen geförderten Stückgüter werden automatisch durch die Transportwagenförderstrecke aufgenommen. Der Transportwagen wird beladen indem die von der Transportwagenstrecke aufgenommenen Stückgüter als Bulkstrom auf der Transportwagenförderstrecke gefördert werden.

Unter einem Bulkstrom versteht man dabei einen Strom von Stückgütern, bei dem die Stückgüter nicht singuliert gefördert werden. Die singulierte Förderung von Stückgut erlaubt eine zuverlässige einzelne Bearbeitung der Stückgüter, beispielsweise deren Sortierung oder Durchleuchtung mittels Röntgenstrahlen. Fördern als Bulkstrom umfasst ein Fördern von Stückgütern in zufälliger Formation, in der Stückgüter sich berühren, sich überlagern, übereinander und/oder nebeneinander liegen können.

Gemäss einem weiteren Aspekt der Erfindung wird ein Verfahren zum Entladen eines mit Stückgütern beladenen Transportwagens vorgestellt. Dabei wird der Transportwagen und eine von dem Transportwagen umfasste Transportwagenförderstrecke angrenzend an einen Eingang einer von dem Transportwagen nicht umfassten Abförderstrecke positioniert. Die Stückgüter werden als Bulkstrom auf der Transportwagenförderstrecke zu der Abförderstrecke gefördert und automatisch durch die Abförderstrecke aufgenommen. Die Stückgüter werden auf der Abförderstrecke von dem Transportwagen weggefördert.

Gemäss einem Ausführungsbeispiel kann ein gemäss dem Verfahren zum Beladen eines Transportwagens beladener Transportwagen an einen Entladeort fahren der zur Entladung der Stückgüter vorgesehen ist, und die Stückgüter also auf diese Weise an den Entladeort transportieren. Gemäss einem detaillierten Ausführungsbeispiel kann an dem Entladeort der Transportwagen gemäss dem Verfahren zum Entladen des mit Stückgütern beladenen Transportwagens entladen werden.

Gemäss einem Ausführungsbeispiel ist der Bulkstrom zweidimensional. Mit andern Worten: Im Bulkstrom liegen die Stückgüter nicht aufeinander. Dies hat den Vorteil, dass die Stückgüter geschont werden.

Gemäss einem Ausführungsbeispiel ist der Bulkstrom dreidimensional. Mit andern Worten: Im Bulkstrom liegen Stückgüter auch aufeinander, beispielsweise in mehreren Schichten. Dies hat den Vorteil, dass die Be- und Entladung noch effizienter vorgenommen werden kann.

Gemäss einem Ausführungsbeispiel umfasst das Positionieren des Transportwagens angrenzend an den Ausgang der Zuführförderstrecke ein Andocken oder Ankoppeln des Transportwagens oder der Transportwagenförderstrecke an die Zuführförderstrecke. Zusätzlich oder alternativ dazu umfasst gemäss weiteren Ausführungsbeispielen das Positionieren des Transportwagens angrenzend an den Eingang der von dem Transportwagen nicht umfassten Abförderstrecke ein Andocken oder Ankoppeln des Transportwagens oder der Transportwagenförderstrecke an die Abförderstrecke.

Gemäss einem Ausführungsbeispiel wird die Transportwagenförderstrecke passiv, beispielsweise mittels der Schwerkraft der Stückgüter angetrieben. Dies erlaubt die Einsparung von Antrieben.

Gemäss einem weiteren Ausführungsbeispiel wird die Transportwagenförderstrecke aktiv angetrieben, also mittels eines eigenen für die Transportwagenförderstrecke vorgesehenen Antriebs, der beispielsweise einen Elektromotor umfasst. Dies ermöglicht eine besonders zuverlässige Förderung auch von leichten oder unförmigen Stückgütern.

Gemäss einem weiteren Ausführungsbeispiel wird die Transportwagenförderstrecke durch einen Übertrieb angetrieben. Der Übertrieb ist beispielsweise eine mechanische Vorrichtung, mittels welcher die Transportwagenförderstrecke an einen die Zuführförderstrecke und/oder die Abförderstrecke antreibenden externen Antrieb angeschlossen und durch diesen externen Antrieb mit angetrieben wird. Dies erlaubt die Einsparung eines Antriebs für die Transportwagenförderstrecke und eine zuverlässige Förderung auch von leichten oder unförmigen Stückgütern.

Gemäss einem Ausführungsbeispiel werden die Stückgüter auf der Zufuhrförderstrecke und/oder auf der Abförderstrecke als Bulkstrom gefördert. Dies erlaubt eine besonders effiziente Beladung und/oder Entladung, da der Strom der Stückgüter bei der Beladung des Transportwagens nicht akkumuliert und/oder bei der Entladung des Transportwagens vereinzelt zu werden braucht.

Gemäss einem weiteren Ausführungsbeispiel werden die Stückgüter auf der Zufuhrförderstrecke und/oder der Abförderstrecke singuliert gefördert. Dies ermöglicht die einfache Durchführung von weiteren Verfahrensschritten, bei denen die Stückgüter vorzugsweise vereinzelt sind, beispielsweise eine Durchleuchtung der Stückgüter, beispielsweise mittels Röntgenstrahlung, oder eine Weiterverarbeitung oder Sortierung der Stückgüter. Gemäss einem detaillierteren Ausführungsbeispiel werden die Stückgüter am Übergang von Zufuhrförderstrecke und Transportwagenförderstrecke akkumuliert. Alternativ dazu können die Stückgüter auch schon vorher, auf der Zufuhrförderstrecke automatisch akkumuliert werden. Gemäss einem weiteren detaillierteren Ausführungsbeispiel werden die Stückgüter am Übergang von Transportwagenförderstrecke und Abförderstrecke vereinzelt. Alternativ dazu können die Stückgüter auch nachher, auf der Abförderstrecke automatisch vereinzelt werden.

Gemäss einem Ausführungsbeispiel werden die Stückgüter auf der Zufuhrförderstrecke automatisch in der Breite verteilt. Dies ermöglicht eine effiziente Beladung des Transportwagens mit einer hohen Packungsdichte.

Gemäss einem Ausführungsbeispiel umfasst der Transportwagen mehrere übereinander angeordnete Transportwagenförderstrecken, die nach einem der in den vorangehenden Ansprüchen beschriebenen Verfahren beladen und/oder entladen werden. Dies erlaubt eine effiziente und schonende Beladung und Beförderung der Stückgüter. Die Stückgüter können auf diese Weise auf mehreren Ebenen auf den Transportwagen aufgeladen oder aufgefördert, sowie von mehreren Ebenen des Transportwagens abgefördert werden.

Gemäss einem Ausführungsbeispiel ist der Transportwagen als fahrerloses Transportfahrzeug ausgestaltet, was einen hohen Automatisierungsgrad ermöglicht. Alternativ dazu kann der Transportwagen auch fahrergesteuert, oder als Kombination von fahrerloser und fahrergesteuerter Ausführung, ausgestaltet sein.

Gemäss einem Ausführungsbeispiel wird der Bulkstrom auf der zuführenden Förderstrecke erzeugt, indem die Stückgüter als Gepäckstücke ausgestaltet sind und von einem Unit Load Device auf die zuführende Förderstrecke entleert werden. Dies erlaubt eine besonders effiziente Entladung und weitere Beförderung von Gepäckstücken im Flughafen, beispielsweise von einem gelandeten Flugzeug zur Gepäckausgabe.

Gemäss einem Aspekt der Erfindung wird ein Logistiksystem zum Beladen und/oder Entladen eines Transportwagens für Stückgüter vorgestellt. Das Logistiksystem umfasst den Transportwagen und ein stationäres Förderstreckensystem, das nicht Teil des Transportwagens ist und das eine Zuführförderstrecke und/oder eine Abförderstrecke umfasst. Der Transportwagen umfasst zusätzlich ein Transportwagenförderstreckensystem mit mindestens einer Transportwagenförderstrecke, die so ausgestaltet und auf dem Transportwagen angeordnet ist, dass sie zur Aufnahme von Stückgütern von der Zuführförderstrecke an einen Ausgang der Zuführförderstrecke und/oder zur Abgabe von Stückgütern an die Abförderstrecke an einen Eingang der Abförderstrecke angrenzend positionierbar ist. Die Zuführförderstrecke ist ausgestaltet, Stückgüter auf die mindestens eine Transportwagenförderstrecke zu fördern und/oder die Abförderstrecke ist ausgestaltet, Stückgüter von der mindestens einen Transportwagenförderstrecke zu übernehmen. Die mindestens eine Transportwagenförderstrecke ist ausgestaltet, die von der Zuführförderstrecke geförderten Stückgüter vom Ausgang der Zuführförderstrecke aufzunehmen und/oder Stückgüter auf den Eingang der Abförderstrecke zu fördern. Die Transportwagenförderstrecke ist ausgestaltet, Stückgüter auf der mindestens einen Transportwagenförderstrecke als Bulkstrom zu fördern.

Gemäss einem Ausführungsbeispiel ist das Logistiksystem zum Beladen und/oder Entladen eines Transportwagens ausgestaltet, eines der oben beschriebenen Verfahren zum Verfahren zum Beladen und/oder Entladen durchzuführen.

Gemäss einem Ausführungsbeispiel umfasst der Transportwagen zwei oder mehr übereinander angeordnete Transportwagenfördertrecken die ausgestaltet sind Stückgüter als Bulkstrom zu fördern. Die Transportwagenfördertrecken und das stationäre Förderstreckensystem sind ausgestaltet, die Transportwagenfördertrecken mit Stückgütern zu beladen und/oder zu entladen.

Gemäss einem Ausführungsbeispiel umfasst das Logistiksystem eine Steuereinrichtung die ausgestaltet und adaptiert ist, das stationäre Förderstreckensystem und/oder das Transportwagenförderstreckensystem so anzusteuern, dass die Stückgüter auf dem stationären Förderstreckensystem und/oder auf dem Transportwagenförderstreckensystem als Bulkstrom gefördert werden.

Gemäss einem Ausführungsbeispiel ist das stationäre Förderstreckensystem ausgestaltet und adaptiert, Stückgüter als Bulkstrom auf das Transportwagenförderstreckensystem zu fördern. Gemäss einem weiteren Ausführungsbeispiel ist das stationäre Förderstreckensystem ausgestaltet und adaptiert, von dem Transportwagenförderstreckensystem auf das stationäre Förderstreckensystem geförderten Stückgüter als Bulkstrom weiter zu fördern.

Gemäss einem Ausführungsbeispiel ist das stationäre Förderstreckensystem ausgestaltet und adaptiert, die Stückgüter singuliert auf das Transportwagenförderstreckensystem zu fördern. Gemäss einem Ausführungsbeispiel ist das Logistiksystem ausgestaltet und adaptiert, die Akkumulation der Stückgüter beim Übergang von dem stationären Förderstreckensystem auf das Transportwagenförderstreckensystem vorzunehmen. Gemäss einem weiteren Ausführungsbeispiel ist das Logistiksystem ausgestaltet und adaptiert, die Akkumulation der Stückgüter auf dem stationären Förderstreckensystem vorzunehmen.

Gemäss einem weiteren Ausführungsbeispiel ist das stationäre Förderstreckensystem ausgestaltet, die von dem Transportwagenförderstreckensystem auf das stationäre Förderstreckensystem geförderten Stückgüter vereinzelt weiter zu fördern. Dabei kann das Logistiksystem gemäss einem Ausführungsbeispiel ausgestaltet sein, die Vereinzelung der Stückgüter beim Übergang von dem Transportwagenförderstreckensystem auf das stationäre Förderstreckensystem vorzunehmen. Gemäss einem weiteren Ausführungsbeispiel ist das Logistiksystem ausgestaltet und adaptiert die Vereinzelung der Stückgüter auf dem stationären Förderstreckensystem vorzunehmen.

Gemäss weiteren Ausführungsbeispielen umfasst ein Bulkstrom ein Fördern von Stückgütern in zufälliger Formation, in der zumindest einige der als Bulkstrom geförderten Stückgüter sich berühren, sich überlagern, übereinander und/oder nebeneinander liegen.

Die Erfindung wird nachfolgend anhand der Figuren beispielsweise näher erläutert. Dabei zeigen:
Figur 1 einen Seitenriss eines Ausschnitts eines Logistiksystems zum Beladen und Entladen eines Transportwagens für Stückgüter gemäss einem Ausführungsbeispiel der Erfindung;
Figur 2 eine Draufsicht des Ausschnitts des Logistiksystems von Figur 1;
Figur 3 einen Seitenriss eines weiteren Ausschnitts des Logistiksystems von Figur 1;
Figur 4 eine Draufsicht des weiteren Ausschnitts des Systems von Figur 3;
Figur 5 ein Schema eines Departure Prozesses auf einem Flughafen, umfassend ein Verfahren zum Beladen und ein Verfahren zum Entladen eines Transportwagens gemäss Ausführungsbeispielen der Erfindung;
Figur 6 ein Schema eines Arrival Prozesses auf einem Flughafen, umfassend ein Verfahren zum Beladen und ein Verfahren zum Entladen eines Transportwagens gemäss Ausführungsbeispielen der Erfindung.

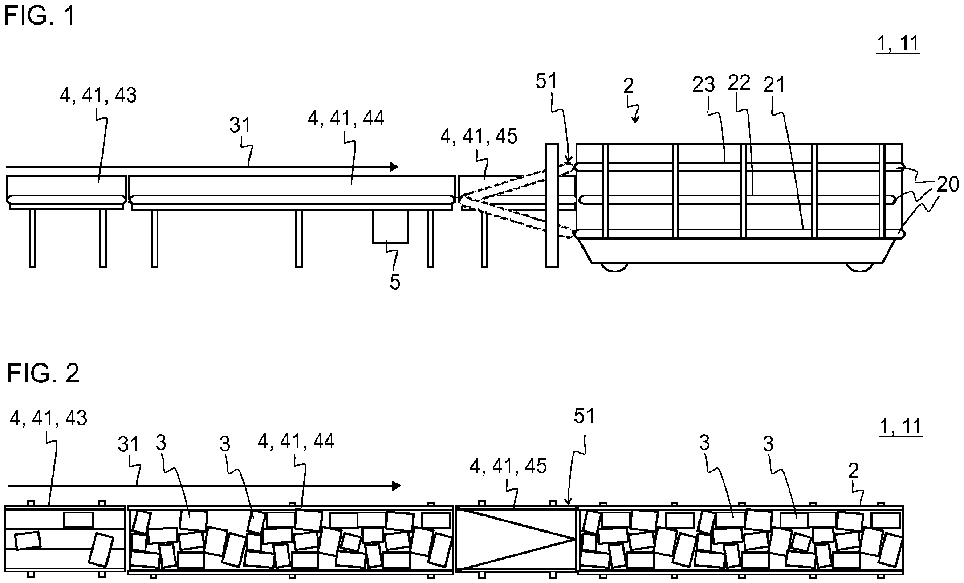

Figur 1 zeigt einen Seitenriss und Figur 2 eine Draufsicht eines Ausschnitts eines Logistiksystems 1 zum Beladen und Entladen eines Transportwagens 2 für Stückgüter 3 gemäss einem Ausführungsbeispiel der Erfindung. Gleichzeitig stellen die Figuren 1 und 2 auch ein Logistiksystem 11 zum Beladen des Transportwagens 2 gemäss einem weiteren Ausführungsbeispiel der Erfindung dar.

Das Logistiksystem 1, sowie das Logistiksystem 11, umfasst den Transportwagen 2 und stationäres, also ein von dem Transportwagen 2 nicht umfasstes Förderstreckensystem 4.

Das stationäre Förderstreckensystem 4 umfasst eine als stationäre Förderstrecke ausgestaltete Zuführförderstrecke 41. Die Zuführförderstrecke 41 umfasst ein Akkumulationssystem 43, eine Bulk-Zuführförderstrecke 44 und eine klappbare Förderstrecke 45.

Der Transportwagen 2 umfasst ein Transportwagenförderstreckensystem 20. Das Transportwagenförderstreckensystem 20 umfasst mehrere (in dem in Figur 1 dargestellten Ausführungsbeispiel drei) übereinander angeordnete Transportwagenförderstrecken 21, 22, 23. Jede der Transportwagenförderstrecken 21, 22, 23 ist auf dem Transportwagen 2 angeordnet und ausgestaltet, dass sie durch Bewegen des Transportwagens an einen Ausgang der zuführenden Förderstrecke 41 anschliessbar ist.

Das Akkumulationssystem 43 ist ausgestaltet, einen Strom von singulierten Stückgütern 3 zu einem Bulkstrom zu akkumulieren. Die Bulk-Zuführförderstrecke 44 ist ausgestaltet, den von dem Akkumulationssystem 43 generierten Bulkstrom aufzunehmen und in Förderrichtung 31 weiter zu fördern. Die klappbare Förderstrecke 45 ist ausgestaltet den Bulkstrom von der Bulk-Zuführförderstrecke 44 aufzunehmen, und auf jede der Transportwagenförderstrecken 21, 22, 23 zu fördern. Dazu umfasst die klappbare Förderstrecke 45 einen Klappmechanismus, mit dem die Höhe des Ausgangs 51 der klappbaren Förderstrecke 45, die gleichzeitig der Ausgang 51 der Zuführförderstrecke 41 ist, auf die Höhe der jeweiligen Transportwagenförderstrecke 21, 22, 23 einstellbar ist. Die Transportwagenförderstrecken 21, 22, 23 sind ausgestaltet und auf dem Transportwagen 2 so angeordnet, dass sie zur Aufnahme von Stückgütern 3 an den Ausgang der Zuführförderstrecke 41 angrenzend positionierbar sind. Zudem sind die Transportwagenförderstrecken 21, 22, 23 ausgestaltet, den von der klappbaren Förderstrecke 45 übernommenen Bulkstrom auf dem Transportwagen 2 als Bulkstrom zu fördern und so den Transportwagen 2 mit den Stückgütern zu beladen.

Anstelle der klappbaren Förderstrecke 45 kann die Zuführförderstrecke 41 auch mehrere übereinander angeordnete Bulkförderstrecken 44 umfassen, die jeweils auf einer der Transportwagenförderstrecken 21, 22, 23 korrespondierenden Höhe angeordnet sind, und welche die Transportwagenförderstrecken 21, 22, 23 beladen. Mit andern Worten: Das stationäre Förderstreckensystem 4 umfasst mehrere übereinander angeordnete stationäre Förderstrecken, die so angeordnet sind, dass die übereinander angeordneten Transportwagenfördertrecken 21, 22, 23 gleichzeitig mit einem Bulkstrom von Stückgütern 3 beladen werden können. Dadurch lässt sich die Beladegeschwindigkeit erhöhen.

Anstelle der in den Figuren dargestellten drei Transportwagenförderstrecken 21, 22, 23 kann der Transportwagen auch eine andere Anzahl Transportwagenförderstrecken umfassen. In einer Variante umfasst der Transportwagen nur eine Transportwagenförderstrecke. Auch in diesem Fall braucht die Zuführförderstrecke 41 keine klappbare Förderstrecke 45 zu umfassen und die Transportwagenförderstrecke kann direkt durch die Bulk-Zuführförderstrecke 44 mit Stückgütern 3 beladen werden.

In den in Figur 1 und 2 dargestellten Ausführungsbeispiel werden die Stückgüter 3 beim Übergang vom Akkumulationssystem 43 auf die Bulk-Zuführförderstrecke 44 zu einem Bulkstrom ackumuliert. Dazu kann das Akkumulationssystem 43 eine ausreichend höhere Fördergeschwindigkeit aufweisen als die Bulk-Zuführförderstrecke 44, wodurch sich am Übergang von dem Ackumulationssystem 43 zu der Bulk-Zuführförderstrecke 44 eine Akkumulation der singulierten Stückgüter zu einem Bulkstrom ergibt. In einer Variante kann diese Akkumulation von singulierten Stückgütern 3 zu einem Bulkstrom auch auf dem Übergang von der Zuführförderstrecke 41 auf das Transportwagenförderstreckensystem 20 vorgenommen werden.

Das Logistiksystem 1, 11 umfasst zudem eine Steuereinrichtung 5, die ausgestaltet und adaptiert ist, das stationäre Förderstreckensystem 4 und/oder das Transportwagenförderstreckensystem 20 so anzusteuern, dass die Stückgüter 3 auf dem stationären Förderstreckensystem 4 und/oder auf dem Transportwagenförderstreckensystem 20 als Bulkstrom gefördert werden. Eine Steuereinrichtung ist jedoch nicht zwingend notwendig, beispielsweise wenn auf der Zuführförderstrecke 41 ein Bulkstrom von Stückgütern 3 gefördert wird, und die zu beladende Transportwagenförderstrecke 21, 22, 23 den Bulkstrom mit derselben Antriebsgeschwindigkeit betrieben wird wie die Zuführförderstrecke 41. Auch kann die Transportwagenförderstrecke 21, 22, 23 mit einer tieferen Fördergeschwindigkeit betrieben werden als die Zuführförderstrecke 41, wodurch sich eine weitere Akkumulation der Stückgüter auf der Transportwagenförderstrecke 21, 22, 23 ergibt. Ebenso kann wie vorhergehenden Absatz beschrieben die Transportwagenförderstrecke 21, 22, 23 mit einer ausreichend tiefen Fördergeschwindigkeit betrieben werden, um einen Strom von singulierten Stückgütern 3 von der Zuführförderstrecke 41 zu übernehmen und diesen zu einem Bulkstrom zu akkumulieren.

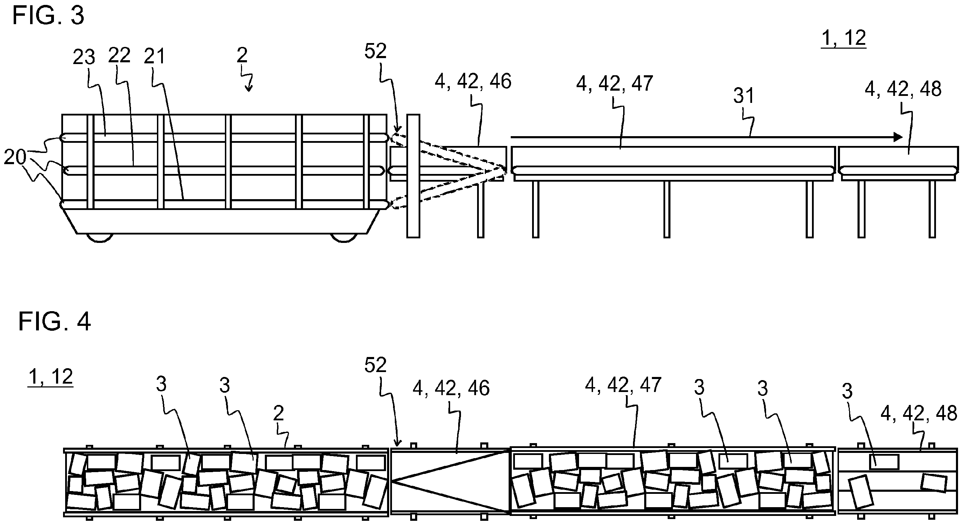

Figur 3 zeigt einen Seitenriss und Figur 4 eine Draufsicht eines Ausschnitts eines Logistiksystems 1 zum Beladen und Entladen eines Transportwagens 2 für Stückgüter 3 gemäss einem Ausführungsbeispiel der Erfindung. Gleichzeitig stellen die Figuren 3 und 4 auch ein Logistiksystem 12 zum Entladen des Transportwagens 2 gemäss einem weiteren Ausführungsbeispiel der Erfindung dar.

Das stationäre Förderstreckensystem 4 umfasst eine als stationäre Förderstrecke ausgestaltete Abförderstrecke 42. Die Abförderstrecke 42 umfasst eine klappbare Förderstrecke 46, eine Bulk-Abförderstrecke 47 und einen Singulator 48.

Die Abförderstrecke 42 kann im Wesentlichen umgekehrt wie die Zuführförderstrecke 41 funktionieren: Jede der Transportwagenförderstrecken 21, 22, 23 ist auf dem Transportwagen 2 angeordnet und ausgestaltet, dass sie durch Bewegen des Transportwagens 2 an einen Eingang 52 der abführenden Förderstrecke 42 anschliessbar ist. Die Transportwagenförderstrecken 21, 22, 23 sind ausgestaltet, auf ihnen geladene Stückgüter 3 als Bulkstrom auf den Eingang 52 der Abförderstrecke 42 zu fördern.

Die klappbare Förderstrecke 46, deren Eingang 52 gleichzeitig der Eingang der Abförderstrecke 42 ist, ist ausgestaltet diesen Bulkstrom aufzunehmen. Um den Bulkstrom jeder der Transportwagenförderstrecken 21, 22, 23 aufzunehmen, umfasst die klappbare Förderstrecke 46 einen Klappmechanismus, mit dem die Höhe des Eingangs 52 der Abförderstrecke 42 auf die Höhe der jeweiligen Transportwagenförderstrecke 21, 22, 23 einstellbar ist. Die Transportwagenförderstrecken 21, 22, 23 sind ausgestaltet und auf dem Transportwagen 2 so angeordnet, dass sie zur Aufnahme von Stückgütern 3 an den Ausgang 52 der Abförderstrecke 42 angrenzend positionierbar sind. Zudem sind die Transportwagenförderstrecken 21, 22, 23 ausgestaltet, die an die klappbare Förderstrecke 46 abzugebenden Stückgüter 4 auf dem Transportwagen 2 als Bulkstrom zu fördern. Von der klappbaren Förderstrecke 46 wird der Bulkstrom weitergegeben an die Bulk-Abförderstrecke 47, welche die Stückgüter weiter an den Singulator 48 leitet, welcher die Stückgüter vereinzelt.

Wie bei dem in den Figuren 1 und 2 dargestellten Logistiksystem 11 zum Beladen eines Transportwagens 2 sind zahlreiche weitere Ausführungsbeispiele auch für das in den Figuren 3 und 4 dargestellten Logistiksystem 12 zum Entladen eines Transportwagens 2 möglich: So ist beispielsweise nicht zwingend eine klappbare Förderstrecke 46 nötig, sondern der Transportwagen 2 kann auch nur einstöckig ausgeführt sein, also nur eine Transportwagenförderstrecke umfassen oder mehreren Transportwagenförderstrecken in derselben Höhe.

Ebenso können die Transportwagenförderstrecken 21, 22, 23 mittels mehrerer Bulk-Abförderstrecken 47, deren Höhen jeweils mit einer der Transportwagenförderstrecken 21, 22, 23 korrespondieren entladen werden, indem die Transportwagenförderstrecken 21, 22, 23 direkt Bulkströme auf die Bulk-Abförderstrecken fördern, und von diesen weitergefördert werden, wodurch eine gleichzeitige Entladung der Transportwagenförderstrecken 21, 22, 23 ermöglicht wird, was ermöglicht, den Transportwagen 2 schneller zu entladen. Auch können die Transportwagenförderstrecken 21, 22, 23 mittels mehrerer Singulatoren 48, deren Höhen jeweils mit einer der Transportwagenförderstrecken 21, 22, 23 korrespondieren entladen werden, indem die Transportwagenförderstrecken 21, 22, 23 direkt Bulkströme auf die Singulatoren fördern, welche die Bulkströme vereinzeln und die Stückgüter singuliert weiter fördern. In andern Ausführungsbeispielen umfasst die Abförderstrecke 42 keinen Singulator.

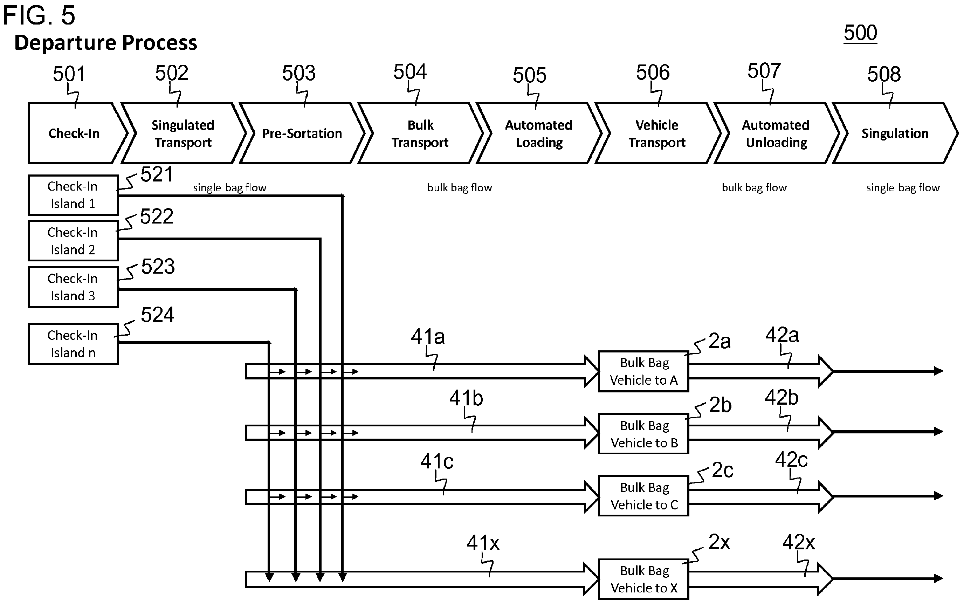

Figur 5 zeigt einen Departure Prozess 500 auf einem Flughafen. Der Departure Prozess 500 umfasst ein Verfahren zum Beladen, ein Verfahren zum Entladen und ein Verfahren zum Be- und Entladen eines Transportwagens 2 gemäss Ausführungsbeispielen der Erfindung.

In einem Verfahrensschritt 501 geben bei einer Check-In-Station Passagiere als Gepäckstücke ausgestaltete Stückgüter an mehreren Check-In-Inseln 521, 522, 523, 524 auf. In einem Verfahrensschritt 502 werden die Gepäckstücke 3 als singulierte Stückgüter 3 gefördert oder transportiert. In einem Verfahrensschritt 503 werden die Gepäckstücke 3 vorsortiert 503, sodass für jede Zielstelle, beispielsweise jeden Flug ein separater Gepäckstrom erstellt wird. Im Verfahrensschritt 504 werden diese vorsortierten singulierten Gepäckströme ackumuliuert und als separate Bulkströme auf jeweils einer Zuführförderstrecke 41a, 41b, 41c, ... 41x gefördert. Jeweils ein Transportwagen 2a, 2b, 2c,... 2x und von dem jeweiligen Transportwagen 2a, 2b, 2c,... 2x umfasste Transportwagenförderstrecken werden angrenzend an mindestens einen Ausgang 51 der von dem jeweiligen Transportwagen 2a, 2b, 2c, ... 2x nicht umfassten mindestens einen jeweiligen Zuführförderstrecke 41a, 41b, 41c, ... 41x positioniert und an diese angedockt. In einem Verfahrensschritt 504 werden die Gepäckstücke 3 auf den Zuführförderstrecken 41a, 41b, 41c, ... 41x zu den Transportwagen gefördert und dort in einem Verfahrensschritt 505 automatisch auf die Transportwagen 2a, 2b, 2c, ... 2x geladen indem sie automatisch durch deren Transportwagenförderstrecken aufgenommen und als Bulkstrom 31 auf den Transportwagenförderstrecken gefördert werden. Dadurch lässt sich jeder der Transportwagen 2a, 2b, 2c, ... 2x sehr effizient beladen.

In dem Verfahrensschritt 506 werden die Gepäckstücke 3 auf den Transportwagen an die vorgesehene Zielstelle gefahren, und dort im Verfahrensschritt 507 als Bulkstrom automatisch von den Transportwagen 2a, 2b, 2c, ... 2x , respektive deren Transportwagenförderstrecken, jeweils auf Abförderstrecken 42a, 42b, 42c, ... 42x gefördert, und anschliessend im Verfahrensschritt 508 für die Verladung in Flugzeuge oder ULDs singuliert.

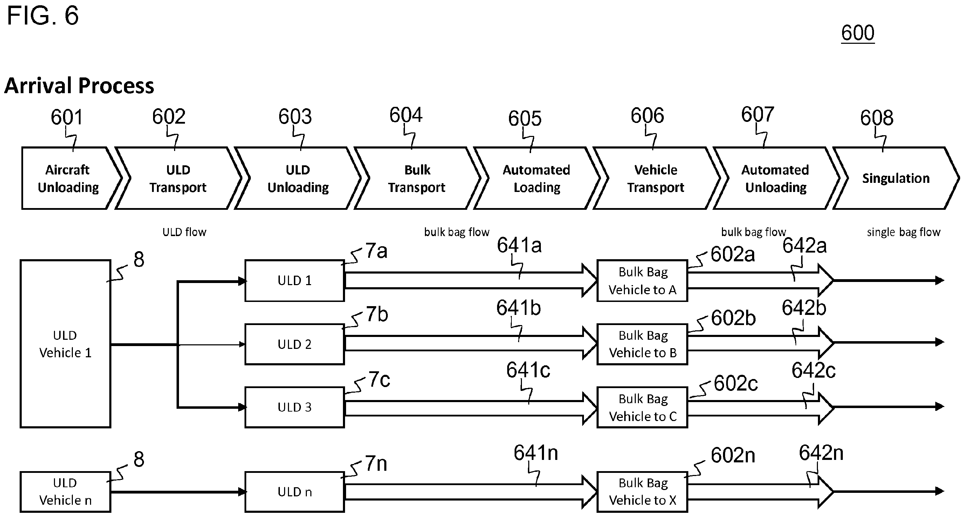

Figur 6 zeigt einen Arrival Prozess 600 auf einem Flughafen. Der Arrival Prozess 600 umfasst ein Verfahren zum Beladen, ein Verfahren zum Entladen und ein Verfahren zum Be- und Entladen eines Transportwagens 2 gemäss Ausführungsbeispielen der Erfindung.

Im Verfahrensschritt 601 werden ULDs 7a, 7b, 7c, 7n von einem gelandeten Flugzeug entladen, im Verfahrensschritt 602 mittels ULD-Fahrzeugen 8 zu Zuführförderstrecken 641a, 641b, 641c, 641n transportiert und im Verfahrensschritt 603 auf diese entleert. Im Verfahrensschritt 604 werden die aus den ULDs entleerten Gepäckstücke 3 oder sonstigen Stückgüter als Bulkströme auf den Zuführförderstrecken 641a, 641b, 641c, 641n gefördert und im Verfahrensschritt 605 von diesen als Bulkströme auf Transportwagen 602a, 602b, 602c, 602n gefördert und auf den Transportwagen 602a, 602b, 602c, 602n durch eine oder mehrere auf den Transportwagen 602a, 602b, 602c, 602n angeordnete Transportwagenförderstrecken weiter auf die Transportwagen 602a, 602b, 602c, 602n gefördert, wodurch die Transportwagen 602a, 602b, 602c, 602n effizient mit Gepäckstücken 3 beladen werden. Die Transportwagen 602a, 602b, 602c, 602n werden im Verfahrensschritt 606 in Richtung Gepäck-Karussells oder sonstigen Reclaim-Einrichtungen gefahren, und dort im Verfahrensschritt 607 automatisch entladen, indem die Gepäckstücke 3 als Bulkstrom von den Transportwagenförderstrecken auf Abförderstrecken 642a, 642b, 642c, 642n gefördert werden. Auf den Abförderstrecken 642a, 642b, 642c, 642n werden die Gepäckstücke 3 in dem Verfahrensschritt 608 singuliert und dann weiter zu den Gepäck-Karussells oder sonstigen Reclaim-Einrichtungen gefördert.

An einem Flughafen lassen sich somit Verfahren und Systeme gemäss Ausführungsbeispielen der Erfindung in vielfältiger Weise ausführen. In den in Figur 5 dargestellten Ausführungsbeispielen wird jeder der Transportwagen 2a, 2b, 2c, ... 2x mittels eines Verfahrens gemäss einem Ausführungsbeispiel der Erfindung mit Stückgütern 3 beladen. Jeder der Transportwagen 2a, 2b, 2c, ... 2x ist beispielsweise wie der anhand der Figuren 1 - 4 beschriebene Transportwagen 2 ausgeführt. Jede der Zuführförderstrecken 41a, 41b, 41c, ... 41x ist beispielsweise wie die anhand der Figuren 1 - 4 beschriebene Zuführförderstrecke 41 ausgeführt. Jede der Abförderstrecken 42a, 42b, 42c, ... 42x ist beispielsweise wie die anhand der Figuren 1 - 4 beschriebene Abförderstrecke 42 ausgeführt. In den in Figur 6 dargestellten Ausführungsbeispielen wird jeder der Transportwagen 602a-n mittels eines Verfahrens gemäss einem Ausführungsbeispiel der Erfindung mit Stückgütern 3 beladen. Jeder der Transportwagen 602a-n ist beispielsweise wie der anhand der Figuren 1 - 4 beschriebene Transportwagen 2 ausgeführt. Jede der Zuführförderstrecken 641a-n ist beispielsweise wie die anhand der Figuren 1 - 4 beschriebene Zuführförderstrecke 41 ausgeführt. Jede der Abförderstrecken 642a-n ist beispielsweise wie die anhand der Figuren 1 - 4 beschriebene Abförderstrecke 42 ausgeführt.

Jeder der in den Figuren 5 und 6 dargestellten Transportwagen 2a-x und 602a-n wird daher mittels Verfahren gemäss Ausführungsformen der Erfindung mit Stückgütern beladen und/oder entladen:
Beladevorgang der als Transportwagen 2 ausgestalteten Transportwagen 2a-2x, 602a-602n: Der Transportwagen 2 und mindestens eine von dem von dem Transportwagen 2 umfassten Transportwagenförderstrecke 21, 22, 23 wird angrenzend an einen Ausgang 51 der Zuführförderstrecke 41 positioniert oder angekoppelt. Stückgüter 3 werden auf der Zuführförderstrecke 41 zu der Transportwagenförderstrecke 21, 22, 23 gefördert und von der durch die Transportwagenförderstrecke 21, 22, 23 automatisch aufgenommen. Der Transportwagen 2 wird durch Fördern der aufgenommenen Stückgüter 3 als Bulkstrom 31 auf der Transportwagenförderstrecke 21, 22, 23 beladen.

Beladevorgang der als Transportwagen 2 ausgestalteten Transportwagen 2a-2x, 602a-602n: Der zuvor mit dem Bulkstrom von Stückgütern beladene Transportwagen 2 wird zu einer Zielstelle mit einer Abförderstrecke 42 gefahren. Dort wird der Transportwagen 2 und mindestens eine von dem Transportwagen 2 umfasste Transportwagenförderstrecke 21, 22, 23 wird angrenzend an einen Eingang 52 einer von dem Transportwagen 2 nicht umfassten Abförderstrecke 42 positioniert oder angekoppelt. Ein Bulkstrom von Stückgütern 3 wird auf der mindestens einen Transportwagenförderstrecke 21, 22, 23 zu der Abförderstrecke 42 gefördert. Der Bulkstrom wird durch die Abförderstrecke 42 automatisch aufgenommen und von dieser weggefördert.

Gemäss einem Auführungsbeispiel werden die Stückgüter 3 bereits auf der Zufuhrförderstrecke 41 und/oder der Abförderstrecke 42 als Bulkstrom gefördert. In einem andern Ausführungsbeispiel können die Stückgüter 3 aber auf der Zufuhrförderstrecke 41 und/oder auf der Abförderstrecke 42 singuliert gefördert werden. Gemäss einem Auführungsbeispiel wird der Bulkstrom auf der Zufuhrförderstrecke 41 durch eine automatische Akkumulation eines singulierten Stroms der Stückgüter 3 erzeugt und/oder die Stückgüter 3 des Bulkstroms werden auf der Abförderstrecke 42 automatisch vereinzelt. In einem andern Ausführungsbeispiel werden die Stückgüter 3 beim Übergang von Zufuhrförderstrecke und Transportwagenförderstrecke akkumuliert. In einem andern Ausführungsbeispiel werden die Stückgüter 3 beim Übergang von der Transportwagenförderstrecke zu Abförderstrecke singuliert.

Gemäss einem Ausführungsbeispiel wird eine Transportwagenförderstrecke 21, 22, 23 passiv, beispielsweise mittels Schwerkraft der Stückgüter angetrieben. Gemäss einem andern Ausführungsbeispiel wird eine Transportwagenförderstrecke 21, 22, 23 aktiv, also mittels eines eigenen Antriebs angetrieben. Gemäss einem andern Ausführungsbeispiel wird eine Transportwagenförderstrecke 21, 22, 23 durch Übertrieb von der Zufuhrförderstrecke 41 und/oder der Abförderstrecke 42 angetrieben. In diesem Fall nützt also die Transportwagenförderstrecke 21, 22, 23 den Antrieb der Zufuhrförderstrecke 41 und/oder der Abförderstrecke 42.

Gemäss einem Ausführungsbeispiel werden Stückgüter 3 des singulierten Stroms auf der Zufuhrförderstrecke 41 und/oder Stückgüter 3 des singulierten Stroms auf der Abförderstrecke mittels Röntgentstrahlung 42 durchleuchtet.

Gemäss einem Ausführungsbeispiel werden die Stückgüter 3 auf der Zufuhrförderstrecke 41 automatisch in der Breite verteilt.

Gemäss einem Ausführungsbeispiel umfasst der Transportwagen 2 mehrere übereinander angeordnete Transportwagenförderstrecken 21, 22, 23, die nach einem der in den vorangehenden Ansprüchen beschriebenen Verfahren beladen und/oder entladen werden.

Gemäss einem Ausführungsbeispiel ist der Transportwagen 2 als Fahrzeug ausgestaltet, beispielsweise als fahrerloses Transportfahrzeug oder als fahrergesteuertes Transportfahrzeug oder als Kombination von fahrerlosem und fahrergesteuertem Transportfahrzeug ausgestaltet.

Gemäss einem Ausführungsbeispiel wird der Bulkstrom auf der zuführenden Förderstrecke 41 erzeugt wird, indem die Stückgüter 3 von einem Unit Load Device auf die zuführende Förderstrecke 41 entleert werden.

Gemäss weiteren Ausführungsbeispielen kann das Be- und Entladesystem 1, 11, 12 an Gurtfördertechnik für Einzelgepäcktransport (schmaler) oder Bulkhandling (breiter) angeschlossen werden.

Gemäss weiteren Ausführungsbeispielen können die ankommenden Gepäckstücke oder sonstigen Stückgüter beispielsweise nach Erfassung der Position durch Pusher, Abweiser oder Drehteller in der Breite verteilt und anschliessend akkumuliert. Beispielweise können durch Start/ Stop-Betrieb in Verbindung mit einer Reduktion der Fördergeschwindigkeit Stückgüter aufeinander gefahren werden, beispielsweise durch bekannte Prinzipien der staudruckarmen Akkumulation. Gegebenenfalls könnte auch ein Singulator im Umkehrprinzip zur Erzeugung eines verdichteten Bulkstroms genutzt werden.

In weiteren Ausführungsbeispielen, insbesondere im technischen Gebiet der Gepäckbeförderung auf Flughäfen, lassen sich Beladezeiten bei automatisiertem Baggage Handling Systemen reduzieren. Zudem können manuelle Be- oder Entladeaufwände eliminiert werden.

Unter Verwendung weiterer Ausführungsbeispiele können Tray Systeme entfallen und Belt-Fördersysteme durch vollautomatisehe Beladung vereinfachen. Die ermöglicht eine Einsparung von Bedienpersonal, sowie eine Zeiteinsparung und alle üblichen Gepäckstückformen können gehandhabt werden. Ein weiterer synergistischer Effekt kann sich durch die Einsparung von Vereinzelungsprozessen für den Transport ergeben. Auch brauchen die Gepäckstücke nicht mehr manuell gehoben werden.

## Patentansprüche

1. Verfahren zum Beladen eines Transportwagens (2) für Stückgüter (3), umfassend die Verfahrenschritte:
Positionieren des Transportwagens (2) und einer von dem Transportwagen (2) umfassten Transportwagenförderstrecke (21, 22, 23) angrenzend an einen Ausgang (51) einer von dem Transportwagen (2) nicht umfassten Zuführförderstrecke (41);
Fördern von Stückgütern (3) auf der Zuführförderstrecke (41) zu der Transportwagenförderstrecke (21, 22, 23);
Automatisches Aufnehmen der auf der Zuführförderstrecke (41) zu dem Transportwagen (2) geförderten Stückgüter (3) durch die Transportwagenförderstrecke (21, 22, 23);
Beladen des Transportwagens (2) durch Fördern der aufgenommenen Stückgüter (3) als Bulkstrom (31) auf der Transportwagenförderstrecke (21, 22, 23).

2. Verfahren zum Entladen eines mit Stückgütern (3) beladenen Transportwagens (2), umfassend die Verfahrenschritte:
Positionieren des Transportwagens (2) und einer von dem Transportwagen (2) umfassten Transportwagenförderstrecke (21, 22, 23) angrenzend an einen Eingang einer von dem Transportwagen (2) nicht umfassten Abförderstrecke (42);
Fördern eines Bulkstroms von Stückgütern (3) auf der Transportwagenförderstrecke (21, 22, 23) zu der Abförderstrecke (42) ;
Automatisches Aufnehmen des Bulkstroms von Stückgütern (3) durch die Abförderstrecke (42);
Wegfördern der Stückgüter (3) auf der Abförderstrecke (42).

3. Verfahren nach Anspruch 1, umfassend zudem die Verfahrensschritte:
Fahren (506, 606) des beladenen Transportwagens (2) an einen Entladeort; und
Positionieren des Transportwagens (2) und der Transportwagenförderstrecke (21, 22, 23) angrenzend an einen Eingang einer von dem Transportwagen (2) nicht umfassten Abförderstrecke (42);
Fördern eines Bulkstroms von Stückgütern (3) auf der Transportwagenförderstrecke (2) zu der Abförderstrecke (42);
Automatisches Aufnehmen des Bulkstroms von Stückgütern (3) durch die Abförderstrecke (42);
Wegfördern der Stückgüter (3) auf der Abförderstrecke (42).

4. Verfahren nach einem der vorhergehenden Ansprüche, wobei die Transportwagenförderstrecke (21, 22, 23) passiv, aktiv oder durch Übertrieb von der Zufuhrförderstrecke (41) und/oder der Abförderstrecke (42) angetrieben wird.

5. Verfahren nach einem der vorhergehenden Ansprüche, wobei die Stückgüter (3) auf der Zufuhrförderstrecke (41) und/oder der Abförderstrecke (42) als Bulkstrom gefördert werden.

6. Verfahren nach einem der vorhergehenden Ansprüche, wobei die Stückgüter (3) auf der Zufuhrförderstrecke (41) und/oder auf der Abförderstrecke (42) singuliert gefördert werden.

7. Verfahren nach einem der vorhergehenden Ansprüche, wobei der Bulkstrom auf der Zufuhrförderstrecke (41) durch eine automatische Akkumulation eines singulierten Stroms der Stückgüter (3) erzeugt wird und/oder die Stückgüter (3) des Bulkstroms auf der Abförderstrecke (42) automatisch vereinzelt werden.

8. Verfahren nach Anspruch 6 oder 7, wobei Stückgüter (3) des singulierten Stroms auf der Zufuhrförderstrecke (41) und/oder Stückgüter (3) des singulierten Stroms auf der Abförderstrecke (42) durchleuchtet werden, beispielsweise mittels Röntgentstrahlung.

9. Verfahren nach einem der vorhergehenden Ansprüche, wobei die Stückgüter (3) auf der Zufuhrförderstrecke (41) automatisch in der Breite verteilt werden.

10. Verfahren nach einem der vorhergehenden Ansprüche, wobei der Transportwagen (2) mehrere übereinander angeordnete Transportwagenförderstrecken (21, 22, 23) umfasst, die nach einem der in den vorangehenden Ansprüchen beschriebenen Verfahren beladen und/oder entladen werden.

11. Verfahren nach einem der vorhergehenden Ansprüche, wobei der Transportwagen (2) als Fahrzeug, als fahrerloses Transportfahrzeug oder als fahrergesteuertes Transportfahrzeug oder als Kombination von fahrerlosem und fahrergesteuertem Transportfahrzeug ausgestaltet ist.

12. Verfahren nach einem der vorhergehenden Ansprüche, wobei der Bulkstrom auf der zuführenden Förderstrecke (41) erzeugt wird, indem die Stückgüter (3) von einem Unit Load Device auf die zuführende Förderstrecke (41) entleert werden.

13. Logistiksystem (1) zum Beladen und/oder Entladen eines Transportwagens (2) für Stückgüter (3), umfassend den Transportwagen (2) und ein stationäres Förderstreckensystem (4), das eine Zuführförderstrecke (41) und/oder eine Abförderstrecke (42) umfasst;
wobei der Transportwagen (2) zusätzlich ein Transportwagenförderstreckensystem (20) mit mindestens einer Transportwagenförderstrecke (21, 22, 23) umfasst, die so ausgestaltet und auf dem Transportwagen (2) angeordnet ist, dass sie zur Aufnahme von Stückgütern (3) an einen Ausgang (51) der Zuführförderstrecke (41) und/oder zur Abgabe von Stückgütern (3) an einen Eingang (52) der Abförderstrecke (42) angrenzend positionierbar ist;
wobei die Zuführförderstrecke (41) ausgestaltet ist, Stückgüter (3) auf die mindestens eine Transportwagenförderstrecke (21, 22, 23) zu fördern und/oder die Abförderstrecke (42) ausgestaltet ist, Stückgüter (3) von der mindestens einen Transportwagenförderstrecke (21, 22, 23) zu übernehmen; und die mindestens eine Transportwagenförderstrecke (21, 22, 23) ausgestaltet ist, die von der Zuführförderstrecke (41) geförderten Stückgüter vom Ausgang (51) der Zuführförderstrecke aufzunehmen und/oder Stückgüter (3) auf die Abförderstrecke (42) zu fördern; und
wobei die Transportwagenförderstrecke (21, 22, 23) ausgestaltet ist, Stückgüter auf der mindestens einen Transportwagenförderstrecke (21, 22, 23) als Bulkstrom zu fördern.

14. Logistiksystem (1) nach Anspruch 13, wobei der Transportwagen (2) zwei oder mehr übereinander angeordnete Transportwagenfördertrecken (21, 22, 23) umfasst,
wobei die Transportwagenfördertrecken (21, 22, 23) und das stationäre Förderstreckensystem (4) ausgestaltet sind, die Transportwagenfördertrecken (21, 22, 23) mit Stückgütern (3) zu beladen und/oder zu entladen; und wobei
die Transportwagenfördertrecken (21, 22, 23) ausgestaltet sind, Stückgüter (3) als Bulkstrom zu fördern.

15. Logistiksystem (1) nach einem der Ansprüche 13 oder 14, umfassend eine Steuereinrichtung die ausgestaltet und adaptiert ist, das stationäre Förderstreckensystem (4) und/oder das Transportwagenförderstreckensystem (21, 22, 23) so anzusteuern, dass die Stückgüter (3) auf dem stationären Förderstreckensystem (4) und/oder auf dem Transportwagenförderstreckensystem (21, 22, 23) als Bulkstrom gefördert werden.
